# EUROPÄISCHE PATENTSCHRIFT

(11) **EP 3 927 138 B1**
(45) Veröffentlichungstag und Bekanntmachung des Hinweises auf die Patenterteilung: **02.07.2025**
(21) Anmeldenummer: 20701277.4
(22) Anmeldetag: 16.01.2020
(51) Int. Cl.: A01C 7/12

(54) **DOSIEREINRICHTUNG FÜR KÖRNIGES GUT UND VERTEILMASCHINE MIT DOSIEREINRICHTUNG**
METERING DEVICE FOR GRANULAR MATERIAL AND DISTRIBUTION MACHINE WITH METERING DEVICE
DISPOSITIF DE DOSAGE POUR MATÉRIEL GRANULAIRE ET MACHINE DE DISTRIBUTION AVEC DISPOSITIF DE DOSAGE

(30) Priorität: 21.02.2019 DE 102019104425
(43) Veröffentlichungstag der Anmeldung: 29.12.2021
(73) Patentinhaber: Amazonen-Werke H. Dreyer SE & Co. KG, 49205 Hasbergen (DE)
(72) Erfinder: RADEKE, Jan Philipp, 27211 Bassum (DE); WIEN, Thomas, 28816 Stuhr (DE)
(86) Internationale Anmeldenummer: PCT/EP2020/050956
(87) Internationale Veröffentlichungsnummer: WO 2020/169277

(56) Entgegenhaltungen:
- EP-A1- 0 772 964
- EP-A1- 3 146 828
- EP-A2- 0 927 511
- US-A- 6 158 630
- US-A1- 2018 263 176

## Beschreibung

Die Erfindung betrifft eine Dosiereinrichtung für körniges Gut gemäß dem Oberbegriff des Patentanspruches 1 und eine Verteilmaschine gemäß dem Oberbegriff des Patentanspruches 15.

Eine derartige Verteilmaschine mit einer Dosiereinrichtung ist in EP 3 146 828 B1 beschrieben. Diese Verteilmaschine wird zum Ausbringen von Saatgut und/oder Dünger eingesetzt und umfasst hierzu einen Vorratsbehälter für die körnigen

Güter, wie Saatgut bzw. Dünger. Der Vorratsbehälter erstreckt sich quer zur Fahrtrichtung und umfasst quer zur Fahrtrichtung nebeneinander angeordnete Auslassöffnungen, denen jeweils eine Dosiereinrichtung zugeordnet ist.

Die Dosiereinrichtung wird zur Abgabe von körnigem Gut, also Saatgut und/oder Dünger, in geregelten Mengen eingesetzt und weist ein oben offenes Dosiergehäuse mit zwei beabstandet zueinander angeordneten Seitenwänden auf. Das Dosiergehäuse umfasst einen Zulauf, über den es an einer Auslassöffnung des Vorratsbehälters angeordnet ist, und einen Auslauf, zwischen denen ein Dosierrad auf einer Welle in einer Dosierrichtung drehend antreibbar angeordnet ist. Das Dosierrad weist zu den Seitenwänden des Dosiergehäuses weisende Stirnseiten auf, wobei zwischen den Stirnseiten und den Seitenwänden jeweils ein Glattrad unbefestigt auf der Welle angeordnet ist. Ferner ist zwischen den Stirnseiten des Dosierrades und den zu den Stirnseiten weisenden Seitenflächen der Glatträder jeweils ein Dichtelement angeordnet.

Im Betrieb wird die Verteilmaschine mit den zugeordneten Dosiereinrichtungen über landwirtschaftliche Flächen verbracht und erfährt hierbei teilweise starke Erschütterungen während das körnige Gut über den Zulauf frei auf das Dosierrad rieselt. Die Erschütterungen oder schon das Verbringen der Verteilmaschine in Hanglagen können dazu führen, dass körniges Gut zufällig über das Dosierrad entgegen der Dosierrichtung befördert wird. Dies kann lokal zu Überdosierungen führen, da zu viel körniges Gut von den Dosiereinrichtungen abgegeben wird, oder das körnige Gut wird bei dieser Dosiereinrichtung aus dem offenen Gehäuse geschleudert und an ungewünschter Stelle auf der landwirtschaftlichen Fläche verteilt.

Nach dem Betrieb der Verteilmaschine verbleiben üblicherweise kleine Restmengen von körnigem Gut in den Dosiergehäusen der Dosiereinrichtungen und die Verteilmaschine wird in Transportstellung gebracht. Im Falle einer zumindest teilweise klappbaren Verteilmaschine werden in Transportstellung Teile der Maschine in eine aufrechte Stellung heraufgeklappt oder sogar in liegende um annährend 180 Grad gedrehte Stellung umgeklappt. Nachteilig bei vorstehend beschriebener Dosiereinrichtung ist, dass diese in zumindest teilweise gedrehter Lage nicht eingerichtet ist, im Dosiergehäuse verbliebene Restmengen an dem ungewünschten Austreten zu hindern, da körniges Gut ungehindert durch das Dosiergehäuse rieseln kann. Besonders nachteiliger Weise würde das körnige Gut bei dieser Dosiereinrichtung aus dem offenen Gehäuse ausgekippt. Diese Dosiereinrichtung weist folglich, insbesondere in Hanglagen und/oder unebenem Gelände, eine mangelnde Dosiergenauigkeit auf und ist für den Einsatz an zumindest teilweise geklappten Maschinen ungeeignet.

Eine weitere Dosiereinrichtung ist aus US 9,420,738 B2 bekannt. Diese Dosiereinrichtung weist mehrere zwischen zwei zueinander beabstandeten Seitenwänden auf einer Welle kraftschlüssig mit dieser verbindbar angeordnete Dosierräder auf, welche jeweils durch unbefestigt auf der Welle angeordnete Glatträder voneinander getrennt sind. Zu vorstehend beschriebener Dosiereinrichtung genannte Nachteile treffen auch auf diese Dosiereinrichtung zu, nämlich dass die Dosiergenauigkeit teilweise ungenügend ist und sie sich nicht zum Einsatz an geklappten Maschinen eignet. Ferner weist diese Dosiereinrichtung keine Dichtelemente zwischen dem Dosierrad und den Glatträdern auf, wodurch das Risiko besteht, dass sich dort Körner verklemmen. Eingeklemmte Körner senken weiter die Dosiergenauigkeit und können die benötigte Antriebsleistung steigern falls ansonsten stillstehende Glatträder über verklemmte Körner mit angetrieben werden. Im schlimmsten Fall kann dies zum Stillstand der gesamten Dosiereinrichtung führen.

Ferner ist in US 6,158,630 A eine Dosiereinrichtung beschrieben, bei der die Glatträder dem Dosierrad zugeordnet sind, so dass sie zusammen von der Welle rotierend antreibbar sind. Dies ist nachteilig, da hierzu eine gesteigerte Antriebsleistung notwendig ist.

Die der Erfindung zugrunde liegende Aufgabe besteht darin, eine Dosiereinrichtung zu schaffen, die eine gesteigerte Dosiergenauigkeit und Funktionssicherheit aufweist.

Diese Aufgabe wird mit den Merkmalen der Patentansprüche 1 und 15 erfüllt. Vorteilhafte Weiterbildungen der Erfindung sind in den Unteransprüchen angegeben.

Das Dosiergehäuse kann geschlossen ausgeführt sein. Das Dosierrad ist kraftschlüssig mit der Welle verbindbar, d.h. in Antriebsverbindung bringbar, bspw. durch eine schaltbare Kupplung oder eine formschlüssige Verbindung des Dosierrades auf der Welle. Das die Glatträder aufweisende Füllteil begrenzt die Bewegung des Dosierrades auf der Welle in axialer Richtung der Welle zur Seitenwand des Dosiergehäuses hin. Die Glatträder dienen insofern als axiale Führung des Dosierrades. Außerdem umgibt das Füllteil das Dosierrad derart, dass körniges Gut nur im Bereich des Dosierrades vom Zulauf zum Auslauf transportiert werden kann. Insofern dichten die Glatträder das Dosiergehäuse zwischen Zulauf und Auslauf so ab, dass körniges Gut nur im Bereich des Dosierrades gefördert wird. Die Glatträder sind unbefestigt auf der Welle angeordnet, das heißt sie sind nicht von der Welle zwangsangetrieben. Im Betrieb der Dosiereinrichtung wird das Dosierrad rotierend angetrieben während die Glatträder still stehen. Das Füllteil mit den zumindest zwei Glatträdern kann einteilig ausgeführt sein, wobei das Dosierrad vorzugsweise eine verkürzte Nabe aufweist und zwischen den Glatträdern unter kurzzeitiger elastischer Verformung einklickbar ist.

Die Erfindung macht sich ferner die Erkenntnis zunutze, dass die Wirkung der Schwerkraft unzureichend sein kann, um sicherzustellen dass körniges Gut nur entlang dem Dosierrad in Dosierrichtung transportiert wird. Die Wirkung der Schwerkraft zum ordnungsgemäßen Transport des körnigen Gutes in der Dosiereinrichtung ist im Betrieb durch Erschütterungen und/oder Hanglagen abgeschwächt bzw. wirkt bei zumindest teilweise klappbaren Maschinen in Betriebs- und Transportstellung in unterschiedliche Richtungen. Dadurch, dass dem Dosierrad Sperrmittel, welche dazu eingerichtet sind, das Dosierrad entgegen der Dosierrichtung vom Zulauf zum Auslauf und/oder in Dosierrichtung vom Auslauf zum Zulauf gegen den Transport von körnigem Gut zu sperren, zugeordnet sind, wird der Einfluss der Schwerkraft auf den ordnungsgemäßen Transport des körnigen Gutes zumindest annährend aufgehoben. Die Sperrmittel können elastisch an dem Dosierrad anliegen und dieses im Betrieb in Dosierrichtung überstreifen. Vorteilhaft ist hierbei, dass körniges Gut nur über das rotierende Dosierrad aus dem Auslauf ausgetragen werden kann, sprich in allen Lagen zumindest annährend an dem selbsttätigen Austreten aus dem Dosiergehäuse über den Auslauf gehindert wird. Die Sperrmittel können ähnlich dem Prinzip eines mechanischen Freilaufs entgegen der Dosierrichtung formschlüssig zwischen den Dichtelementen in das Dosierrad eingreifen, so dass körniges Gut im Bereich des Dosierrades nur in Dosierrichtung transportiert werden kann. In besonders vorteilhafter Weise wird so verhindert, dass körniges Material durch Erschütterungen o.Ä. entgegen der Dosierrichtung über das Dosierrad hinweg befördert wird. Insbesondere ist das Dosiergehäuse durch die Sperrmittel in einen Förderbereich, welcher sich in Dosierrichtung entlang dem Dosierrad vom Zulauf zum Auslauf erstreckt und einen Nicht-Förderbereich, welcher sich in Dosierrichtung vom Auslauf zum Zulauf bzw. entgegen der Dosierrichtung vom Zulauf zum Auslauf erstreckt, unterteilt.

Die jeweils zwischen der Stirnseite des Dosierrades und der Seitenfläche des Glattrades angeordneten Dichtelemente reduzieren zudem erheblich das Risiko, dass sich Körner innerhalb der Dosiereinrichtung, insbesondere zwischen stehenden und angetriebenen Komponenten, also Glatträdern und Dosierrad, verklemmen. Die Dichtelemente können als Verschleißteil zwischen Dosierrad und Glatträdern dienen, das heißt um den Verschleiß des Dosierrades und/oder der Glatträder zu mindern, ist vorgesehen, dass die Dichtelemente so ausgeführt sind, dass sie gezielt zumindest annährend anstelle dem Dosierrad und/oder den Glatträdern verschleißen. Die Dichtelemente können insofern als Verschleißteil wie ein Opferbauteil zwischen Dosierrad und Glatträdern wirken. Vorteilhaft ist hierbei, dass die Dichtelemente das auftretende Drehmoment zwischen dem Dosierrad und den Glatträdern verringern und so die benötigte Antriebsleistung reduzieren.

In einer vorteilhaften Weiterbildung der Dosiereinrichtung ist vorgesehen, dass das Dichtelement als zumindest annährend halbkreisförmiges Blechteil ausgeführt ist, wobei sich das Blechteil vom Zulauf in Rotationsrichtung des Dosierrades kreisabschnittförmig zum Auslauf zwischen der Seitenfläche des jeweiligen Glattrades und der Stirnseite des Dosierrades erstreckt. Dieser Weiterbildung liegt der Gedanke zugrunde, dass, insbesondere aufgrund der Sperrmittel, das Dosierrad fast ausschließlich in Rotationsrichtung des Dosierrades, sprich in Dosierrichtung, zwischen Zulauf und Auslauf mit körnigem Gut in Kontakt kommt. Ohne das Verklemmen von Körnern zu riskieren kann folglich das auftretende Drehmoment und somit die benötigte Antriebsleistung aufgrund der minimierten Kontaktfläche zwischen Dichtelement und Dosierrad weiter reduziert werden, indem das Dichtelement als annährend halbkreisförmiges Blechteil ausgeführt wird.

In einer alternativen vorteilhaften Weiterbildung der Dosiereinrichtung ist vorgesehen, dass das Dichtelement als ringförmiges Blechteil ausgeführt ist, wobei sich das Blechteil kreisartig die Welle umgreifend zwischen der Seitenfläche des jeweiligen Glattrades und der Stirnseite des Dosierrades erstreckt. Vorteilhaft bei dieser Weiterbildung ist, dass durch die Ausführung des Dichtelementes als ringförmiges Blechteil das Dosierrad entlang seines Umfangs von dem Dichtelement geführt wird. Somit wird ein verbesserter Rundlauf des Dosierrades und eine sichere axiale Führung des Dosierrades auf der Welle erreicht. Diese Weiterbildung zeichnet sich folglich durch eine gesteigerte Betriebssicherheit aufgrund des verbesserten Rundlaufs des Dosierrades und dem zusätzlich geminderten Risiko von zwischen den Glatträdern und dem Dosierrad verklemmten Körnern aus.

In einer weiteren besonders vorteilhaften Weiterbildung der Dosiereinrichtung weist das ringförmige Blechteil im Bereich des Auslaufs aus dem Dosiergehäuse eine Ausnehmung auf, wobei die Dosiereinrichtung mittels der Ausnehmung dazu eingerichtet ist, zwischen dem Blechteil und der Stirnseite des Dosierrades eingeklemmtes körniges Gut auszuwerfen. Zwischen dem Dosierrad und dem Blechteil eingeklemmtes Material wird im Betrieb der Dosiereinrichtung zumindest annährend auf einer Kreisbahn abgewälzt. Durch die Ausnehmung ist eine Unterbrechung dieser Kreisbahn geschaffen, so dass das eingeklemmte Material im Bereich des Auslaufs aus dem Wälzkontakt freigegeben wird und in den Auslauf fällt. In vorteilhafter Weise wird die Betriebssicherheit der Dosiereinrichtung infolge dieser Maßnahme gesteigert.

Die Dosiereinrichtung ist ferner vorteilhaft dadurch weitergebildet, dass die Glatträder im Bereich des Auslaufs aus dem Dosiergehäuse jeweils eine Ausnehmung aufweisen, wobei die Dosiereinrichtung mittels zumindest einer Ausnehmung dazu eingerichtet ist, zwischen dem Glattrad und der Stirnseite des Dosierrades eingeklemmtes körniges Gut auszuwerfen. Durch die Ausnehmung erhöht sich im Bereich des Auslaufs der Abstand zwischen dem Glattrad und dem Dosierrad, so dass eventuell eingeklemmtes Material herausfällt und dem Auslauf zugeführt wird. Dies ist vorteilhaft für die Betriebssicherheit der Dosiereinrichtung.

In einer weiteren vorteilhaften Ausführungsform der Erfindung weist zumindest ein Glattrad zwischen dem Dichtelement und der zum Dichtelement weisenden Seitenfläche ein, vorzugsweise elastisches, in Richtung der Seitenwände wirkendes Federelement auf. Vorzugsweise weist jedes Glattrad ein Federelement auf. Das Federelement kann einen Federweg von zumindest 1mm aufweisen. Das Federelement kann als Ausgleich für Form- und Lagetoleranzen der Dosiereinrichtung, insbesondere des Dosiergehäuses, des Dosierrades, der Glatträder und/oder der Dichtelemente, dienen, indem es das Dichtelement sicher in Anlage zur Stirnseite des Dosierrades und das Glattrad in Anlage zur Seitenwand des Dosiergehäuse hält. Infolge dieser Maßnahme ist die Dichtigkeit der gesamten Anordnung gesteigert und die Montage und Betriebssicherheit verbessert.

In einer weiteren besonders vorteilhaften Ausführungsform der Erfindung ist vorgesehen, dass das Federelement als ringförmiges Schaumstoffteil ausgeführt ist, wobei sich das Schaumstoffteil kreisartig die Welle umgreifend zwischen der Seitenfläche des Glattrades und dem Dichtelement erstreckt. In einfacher Weise wird durch das ringförmige Schaumstoffteil das Dichtelement über den ganzen Umfang des Dosierrades sicher in Anlage an selbiges gehalten und das Glattrad zumindest annährend ganzflächig an die Seitenwand des Dosiergehäuses angedrückt. Die axiale Ausrichtung der auf der Welle angeordneten Komponenten ist somit in einfacher Weise verbessert.

Eine besonders zweckmäßige Anordnung der Dosiereinrichtung ist dadurch geschaffen, dass das Dosierrad zumindest annährend in der Mitte zwischen den beabstandet zueinander angeordneten Seitenwänden angeordnet ist. Die Dosiereinrichtung kann zumindest teilweise symmetrisch ausgeführt sein, so dass rechts und links der Mitte, also des Dosierrades, Gleichteile verwendet werden können. In einfacher Weise sind die Herstellkosten der Dosiereinrichtung somit reduziert.

In einer weiteren vorteilhaften Weiterbildung der Dosiereinrichtung ist vorgesehen, dass die Dichtelemente und/oder die Glatträder Mittel aufweisen mittels derer die Dichtelemente formschlüssig an dem jeweiligen Glattrad befestigt sind. In einfacher Weise wird so verhindert, dass die Dichtelemente durch Reibkontakt mit dem Dosierrad in Rotation versetzt und somit mit angetrieben werden. Ferner sind so definierte Kontaktbedingungen zwischen Dosierrad und Dichtelement geschaffen, die in vorteilhafter Weise bei der Auslegung der Komponenten, insbesondere der Dichtelemente als Verschleißpartner, berücksichtigt werden können.

Um die Kontaktfläche zwischen dem Dosierrad und den Dichtelementen zu reduzieren, ist in einer weiteren vorteilhaften Weiterbildung der Dosiereinrichtung vorgesehen, dass die Stirnseiten des Dosierrades muldenförmig ausgebildet sind. Diese Weiterbildung zeichnet sich folglich durch einen besonders gesenkten Drehmomentbedarf bzw. eine reduzierte benötigte Antriebsleistung aus.

Die Dosiereinrichtung ist außerdem vorteilhaft dadurch weitergebildet, dass das Dosierrad zumindest annährend so breit ist wie ein Glattrad. So ergibt sich für die Einheit aus Dosierrad und beidseitig angeordneten Glatträdern ein vorteilhaftes Verhältnis von 2:1 zwischen Förderbereich und Glattbereich.

In einer weiteren vorteilhaften Ausführungsform der Dosiereinrichtung ist das die zumindest zwei Glatträder aufweisende Füllteil einstückig ausgebildet. Einstückig ausgebildet, das heißt aus einem Teil bestehend. Das Füllteil kann nur beispielsweise ein im Spritzgussverfahren hergestelltes Kunststoffteil sein. In vorteilhafterweise wird somit die Anzahl der Einzelteile reduziert und ein Montageschritt eingespart. Das Füllteil kann zumindest teilweise elastisch ausgeführt sein, so dass sich das Dosierrad zwischen den Glatträdern in das Füllteil einsetzen lässt und aus dem Füllteil demontierbar ist. Vorteilhaft ist ferner, dass infolge dieser Maßnahme das Dosierrad besonders sicher zwischen den Glatträdern geführt ist.

In einer weiteren vorteilhaften Weiterbildung der Dosiereinrichtung weisen das Dosierrad, die Dichtelemente und das zumindest eine Federelement einen nahezu identischen Außendurchmesser auf. Der Außendurchmesser des Dosierrades wird bemessen am Außendurchmesser ggf. auf der Mantelfläche des Dosierrades angeordneter Förderelemente, wie bspw. Schaufeln. Die Dosiereinrichtung ist infolge dieser Weiterbildung in einfacher Weise besonders dicht ausgeführt, so dass körniges Gut annährend nur im Bereich des Dosierrades durch Rotation desselbigen gefördert wird. Das körnige Gut kann somit durch Ansteuerung des Antriebs des Dosierrades besonders genau dosiert werden.

In einer weiteren vorteilhaften Ausführungsform umfassen die Sperrmittel zumindest eine elastische Dichtlippe. Die elastische Dichtlippe kann in Anlage zum Dosierrad angeordnet sein, so dass sie das Dosierrad überstreicht. Der Transport von körnigem Gut entgegen der Dosierrichtung ist somit nahezu vollständig blockiert. Das ungewünschte Austreten von Material wird somit verhindert und die Dosiergenauigkeit gesteigert.

In einer weiteren ebenfalls voreilhaften Ausführungsform ist vorgesehen, dass die Sperrmittel zumindest ein Bürstenelement umfassen. Das Bürstenelement kann Borsten aufweisen, die das Dosierrad überstreichen. Vorteilhaft ist hierbei, dass das Dosierrad durch die als Bürstenelement ausgeführten Sperrmittel zusätzlich gereinigt wird. Staub und andere Teilchen werden im Betrieb durch das Bürstenelement von dem Dosierrad gefegt, wodurch sich die Dosiergenauigkeit erhöht.

Die Aufgabe der Erfindung wird außerdem durch eine Verteilmaschine der eingangs genannten Art gelöst, wobei die Dosiereinrichtung nach zumindest einer der vorstehenden Ausführungsformen ausgebildet ist. Bezüglich der Vorteile der Verteilmaschine wird auf die Vorteile der verschiedenen Ausführungsformen der Dosiereinrichtung verwiesen.

Weitere Einzelheiten der Erfindung sind der Beispielsbeschreibung und den Zeichnungen zu entnehmen. Die Zeichnungen zeigen
Fig.1 eine hinter einem Ackerschlepper angeordnete als Einzelkornsämaschine ausgeführte Verteilmaschine in perspektivischer Ansicht,
Fig.2 eine Dosiereinrichtung mit einem geschlossenen Dosiergehäuse in perspektivischer Ansicht,
Fig.3 die Dosiereinrichtung, gemäß Fig.2, wobei das Dosiergehäuse geöffnet ist und den Blick auf eine erste Ausführungsform eines Dosierrades freigibt, in perspektivischer Ansicht,
Fig.4 das aus dem Dosiergehäuse ausgebauten Dosierrad, gemäß Fig.2-3, in perspektivischer Ansicht,
Fig.5 das Dosierrad, gemäß Fig.2-4, in Explosionsansicht,
Fig.6 das Dosierrad, gemäß Fig.2-5, in Quer-Schnittansicht,
Fig.7 das Dosierrad, gemäß Fig.2-6, in Längs-Schnittansicht,
Fig.8 eine aus einem Dosiergehäuse ausgebaute zweite Ausführungsform eines Dosierrades in perspektivischer Ansicht,
Fig.9 das Dosierrad, gemäß Fig.8, in Explosionsansicht, und
Fig.10 das Dosierrad, gemäß Fig.8-9, in Längs-Schnittansicht.

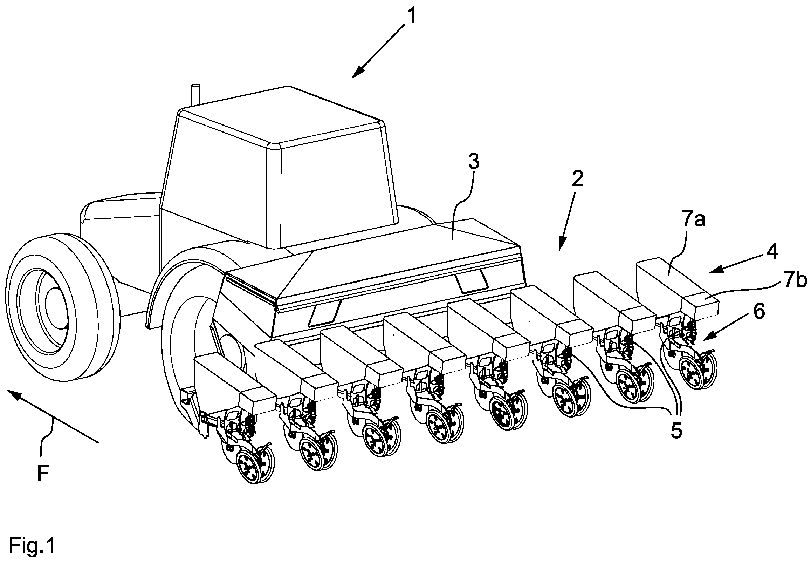

Eine hinter einem Ackerschlepper 1 angeordnete, als Einzelkornsämaschine 2 ausgeführte Verteilmaschine ist in Fig.1 zu sehen. Die Einzelkornsämaschine 2 weist an ihrem in Fahrtrichtung F vorderen Ende einen Vorratsbehälter 3 für Saatgut und/oder Dünger und an ihrem hinteren Ende eine Mehrzahl von quer zur Fahrtrichtung F nebeneinander angeordneten Säaggregaten 4 auf. Der auf dem Rahmen der Einzelkornsämaschine 2 aufgesattelte Vorratsbehälter 3 ist trichterförmig ausgeführt und weist an seinem unteren Ende von den Säaggregaten 4 verdeckte Auslassöffnungen auf, denen jeweils eine Dosiereinrichtung 5 für körniges Gut zugeordnet ist. Bei dieser Einzelkornsämaschine 2 entspricht die Anzahl der Auslassöffnungen bzw. Dosiereinrichtungen 5 der Anzahl der Säaggregate 4, wobei jeweils eine Dosiereinrichtung 5 zur Abgabe von in dem Vorratsbehälter 3 bevorratetem Material in dosierten Mengen eingerichtet und über nicht dargestellte Ausbringleitungen mit einem Säaggregat 4 verbunden ist. Auf diese Weise kann an den Säaggregaten 4 zusätzlich Dünger und/oder Saatgut aus dem Vorratsbehälter 3 verteilt werden.

Es ist ebenso denkbar, dass der Vorratsbehälter 3 eine von der Anzahl der Säaggregate 4 abweichende Anzahl von Auslassöffnungen mit Dosiereinrichtungen 5 aufweist. In dem Fall, dass mehr Dosiereinrichtungen 5 als Säaggregate 4 an der Einzelkornsämaschine 2 vorhanden sind, ist es denkbar, dass ein Säaggregat 4 von mehr als einer Dosiereinrichtung 5 versorgt wird und/oder zumindest eine Dosiereinrichtung 5 abgeschaltet bzw. die zugehörige Auslassöffnung durch einen Absperrschieber 6 verschlossen wird. In dem Fall, dass mehr Säaggregate 4 als Dosiereinrichtungen 5 an der Einzelkornsämaschine 2 vorhanden sind, ist es denkbar, dass eine Dosiereinrichtung 5 mehrere Säaggregate 4 mit Material versorgt. Hierzu kann nur beispielsweise eine geteilte Ausbringleitung Verwendung finden.

Die Säaggregate 4 sind quer zur Fahrtrichtung F an einem Rahmen der Einzelkornsämaschine 2 nebeneinander angeordnet und tragen jeweils zwei Materialtanks 7a, 7b, einen ersten Materialtank 7a vorzugsweise für Saatgut und einen zweiten Materialtank 7b vorzugsweise für Saatgut und/oder Dünger. Der erste Materialtank 7a ist mit einer verdeckten Vereinzelungseinrichtung zur vereinzelten Abgabe von Saatgut verbunden, um das Saatgut im Betrieb auf einer landwirtschaftlichen Nutzfläche zu verteilen. Dem zweiten Materialtank 7b, der auch als Mikrogranulattank bezeichnet werden kann, ist ebenfalls eine Dosiereinrichtung 5 zugeordnet, um das bevorratete Material auszubringen.

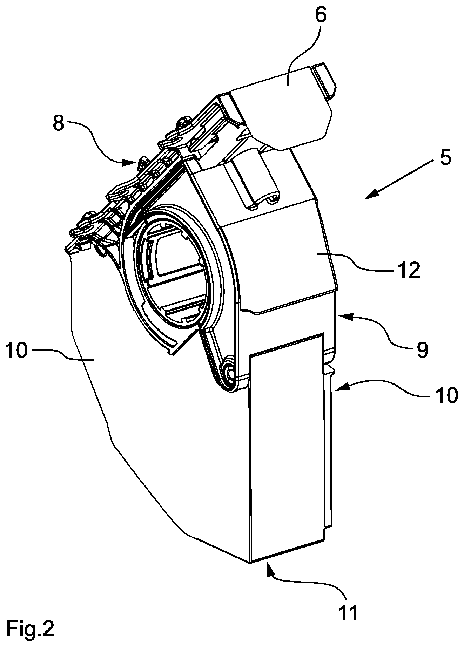

Eine solche Dosiereinrichtung 5, wie sie am Vorratsbehälter 3 und am zweiten Materialtank 7b eingesetzt wird, ist in Fig.2 in von der Einzelkornsämaschine 2 isolierter Ansicht zu sehen. Die Dosiereinrichtung 5 ist über den Absperrschieber 6 an einer Auslassöffnung des Vorratsbehälters 3 bzw. dem Materialtank 7b angeordnet. Der Absperrschieber 6 kann zumindest zwischen einer geschlossenen und einer geöffneten Stellung verbracht werden, so dass körniges Gut über einen Zulauf 8 in die Dosiereinrichtung 5 eintreten kann. Die Dosiereinrichtung 5 weist ein geschlossenes Dosiergehäuse 9 auf. Das Dosiergehäuse 9 ist ferner im Wesentlichen gebildet durch zwei beabstandet zueinander angeordnete, gegenüberliegende Seitenwände 10, zwischen denen sich am unteren Ende ein Auslauf 11 erstreckt, und eine Gehäuseklappe 12. An den Auslauf 11 kann sich eine Ausbringleitung anschließen, so dass das von der Dosiereinrichtung 5 abgegebene Material an gewünschter Stelle verteilt wird.

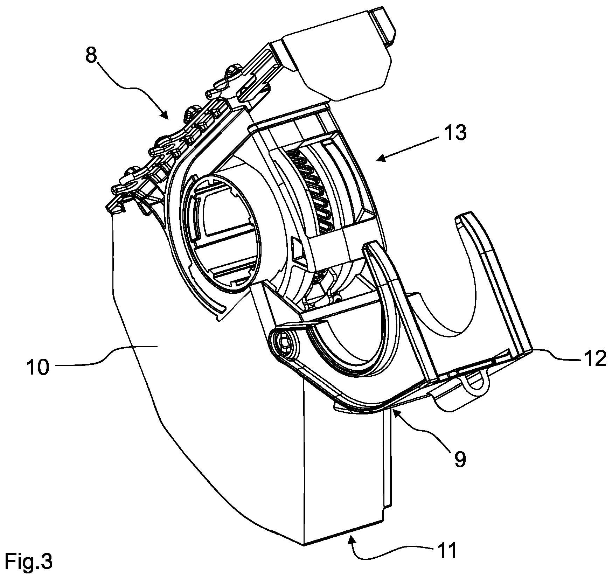

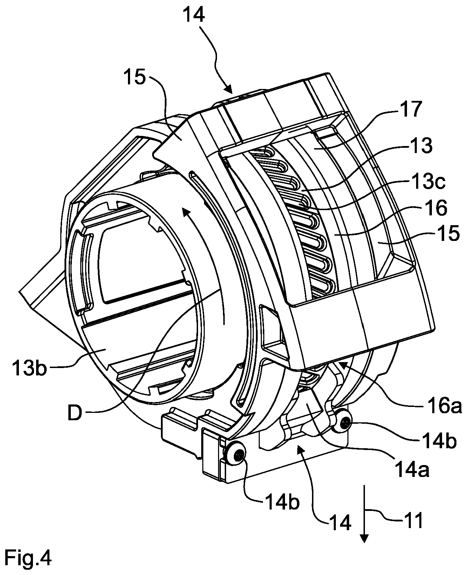

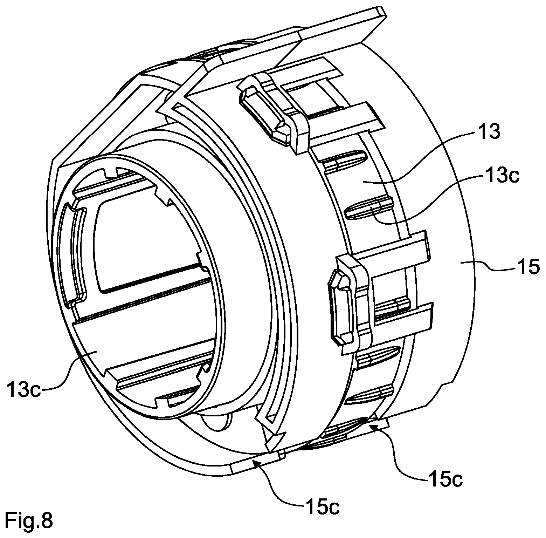

Die Gehäuseklappe 12 kann um eine Schwenkachse herabgeklappt werden, so dass das Dosiergehäuse 9 geöffnet ist und den Blick auf eine erste Ausführungsform eines Dosierrades 13 freigibt, wie Fig.3 zeigt. **In** dieser Stellung kann das zwischen Zulauf 8 und Auslauf 11 und zumindest annährend in der Mitte zwischen den beabstandet zueinander angeordneten Seitenwänden 10 angeordnete Dosierrad 13 aus dem Dosiergehäuse 9 entnommen werden. Die Fig.2-7 zeigen eine erste Ausführungsform des Dosierrades 13, wobei das Dosierrad 13 in aus dem Dosiergehäuse 9 entnommener Ansicht in den Fig.4-7 gezeigt ist. Eine zweite Ausführungsform des Dosierrades 13 ist in den Fig.8-10 in aus dem Dosiergehäuse 9 entnommener Stellung zu sehen.

Das Dosierrad 13 weist zu den Seitenwänden 10 weisende Stirnseiten 13a auf und ist in im Dosiergehäuse 9 eingebauter Lage auf einer nicht dargestellten Welle angeordnet mit der es kraftschlüssig verbindbar ist. Für diese Antriebsverbindung zur Welle weist das Dosierrad 13 eine Nabe 13b auf und ist so drehend in einer Dosierrichtung D antreibbar. Dem Dosierrad 13 sind ferner Sperrmittel 14 zugeordnet, welche dazu eingerichtet sind, das Dosierrad 13 entgegen der Dosierrichtung D vom Zulauf 8 zum Auslauf 11 und in Dosierrichtung D vom Auslauf 11 zum Zulauf 8 gegen den Transport von körnigem Gut zu sperren. Rechts und links vom Dosierrad 13, genauer an jeder Stirnseite 13a des Dosierrades 13, ist ein Glattrad 15 angeordnet, welches sich zwischen der jeweiligen Stirnseite 13a und der jeweiligen Seitenwand 10 des Dosiergehäuses 9 erstreckt. Die Glatträder 15 bilden zusammen ein sogenanntes Füllteil und füllen somit den Bauraum zwischen Dosierrad 13 und den Seitenwänden 10 innerhalb des Dosiergehäuses 9 zumindest annährend aus, so dass körniges Gut zumindest annährend ausschließlich im Bereich des Dosierrades 13 vom Zulauf 8 zum Auslauf 11 durch das Dosiergehäuse 9 geleitet wird. Die Glatträder 15 sind unbefestigt auf der nicht dargestellten Welle angeordnet, so dass diese im rotierenden Betrieb des Dosierrades 13 nicht mit angetrieben werden. In den vorliegenden Ausführungsformen ist das Füllteil zweiteilig ausgeführt. Die Glatträder 15 lassen sich lösbar befestigt zum Füllteil zusammenstecken. In einer nicht gezeigten Ausführungsform ist das Füllteil einstückig ausgebildet, das heißt einteilig ausgeführt.

Ebenfalls beidseitig des Dosierrades 13 ist zwischen der jeweiligen Stirnseite 13a und einer zu dieser Stirnseite 13a weisenden Seitenfläche 15a des jeweiligen Glattrades 15 ein Dichtelement 16 angeordnet. Das Dichtelement 16 ist in dieser ersten Ausführungsform des Dosierrades 13 als ringförmiges Blechteil ausgeführt und erstreckt sich kreisartig die Welle umgreifend zwischen der Seitenfläche 15a des Glattrades 15 und der Stirnseite 13a des Dosierrades 13.

Das Dichtelement 16 soll das Verklemmen von körnigem Gut zwischen angetriebenem Dosierrad 13 und stillstehenden Glatträdern 15 verhindern und ist formschlüssig über als Befestigungsnuten 16b am Dichtelement 16 und korrespondierende in die Befestigungsnuten 16b eingreifende als Verdrehsicherung 15b am Glattrad 15 ausgeführte Mittel drehfest am Glattrad 15 angeordnet. Im Betrieb der Dosiereinrichtung 5 steht das Dichtelement 16 folglich still. Sollten sich dennoch einzelne Körner zwischen dem Dosierrad 13 und einem Glattrad 15 verklemmen, so weist das hier als ringförmige Blechteil ausgeführte Dichtelement 16 eine Ausnehmung 16a im Bereich des Auslaufs 11 aus dem Dosiergehäuse 9 auf. Der ansonsten flächige, kreisförmige Kontakt zwischen dem Dichtelement 16 und der Stirnseite 13a des Dosierrades 13 ist durch die Ausnehmung 16a unterbrochen, so dass lokal Raum für eingeklemmtes Gut freigegeben wird und die Dosiereinrichtung 5 mittels der Ausnehmung 16a dazu eingerichtet ist, zwischen dem Dichtelement 16 und der Stirnseite 13a eingeklemmtes körniges Gut auszuwerfen.

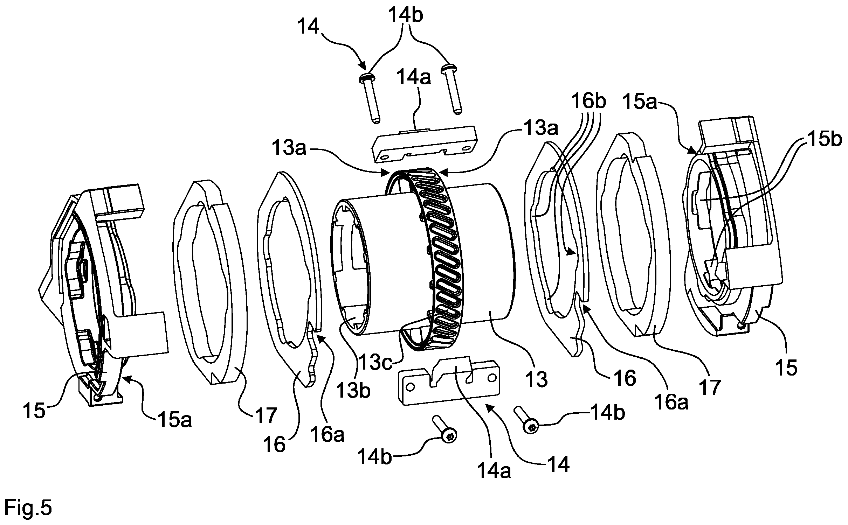

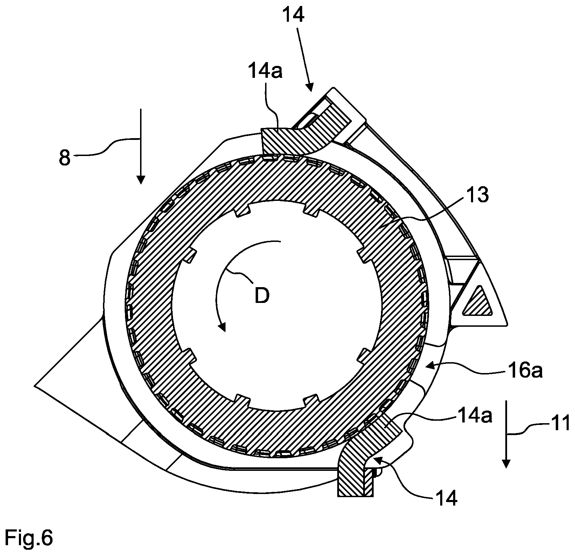

Die Sperrmittel 14, vorgesehen um das ungewollte Austreten von körnigem Gut aus der Dosiereinrichtung 5 zu verhindern, sind im Bereich des Zulaufs 8 an der oberen Seite des Dosierrades 13 und im Bereich des Auslaufs 11 an der unteren Seite des Dosierrades 13 angeordnet und umfassen eine elastische Dichtlippe 14a. In einer nicht gezeigten Ausführungsform können die Sperrmittel 12 alternativ oder zusätzlich zumindest ein Bürstenelement umfassen. Wie die Quer-Schnittansicht des Dosierrades 13 in Fig.6 zeigt, legen sich die Dichtlippen 14a flexibel an das Dosierrad 13 an. Im Bereich des Zulaufs 8 wird so sowohl bei stillstehendem als auch bei in Dosierrichtung D angetriebenem Dosierrad 13 verhindert, dass körniges Gut entgegen der Dosierrichtung D vom Zulauf 8 zum Auslauf 11 transportiert wird. Im Bereich des Auslaufs 11 legt sich die Dichtlippe 14a ebenfalls flexibel an das Dosierrad 13 an und verhindert so bei stillstehendem Dosierrad 13, dass körniges Gut in Dosierrichtung D vom Auslauf 11 zum Zulauf 8 transportiert werden kann. Bei angetriebenem Dosierrad 13 wird das körnige Gut in und/oder zwischen auf der Mantelfläche des Dosierrades 13 angeordneten Förderelementen 13c in den Keil zwischen Dichtlippe 14a und Dosierrad 13 mitgenommen und rieselt nach Hindurchtreten zwischen Dosierrad 13 und Dichtlippe 14a in den Auslauf 11. Zur Befestigung der Sperrmittel 14 sind jeweils zwei Schrauben 14b vorgesehen, über die sie sich in an den Glatträdern 15 vorgesehenen Bohrungen festlegen lassen, wie Fig.4 und 5 zeigen.

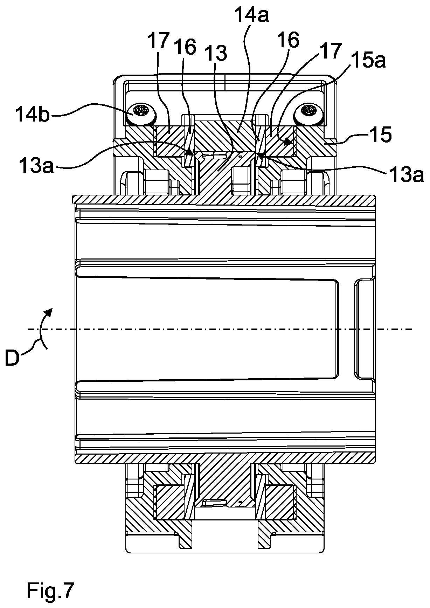

Um eine einfache Montage der Dosiereinrichtung 5, insbesondere des Dosierrades 13, zu ermöglichen, ist zwischen dem Dichtelement 16 und der zum Dichtelement 16 weisenden Seitenfläche 15a der beiden Glatträder 15 ein als ringförmiges Schaumstoffteil, insbesondere Schaumfeder, ausgeführtes Federelement 17 angeordnet. Das hier als ringförmige Schaumstoffteil ausgebildete Federelement 17 umgreift die nicht dargestellte Welle kreisartig und erstreckt sich zwischen der Seitenfläche 15a des jeweiligen Glattrades 15 und dem jeweiligen Dichtelement 16. Das Federelement 17 wirkt in Richtung der Seitenwände 10 und weist einen Federweg von zumindest annährend einem Millimeter auf, so dass das Dichtelement 16 mittels dem Federelement 17 sicher in Anlage zu Stirnseite 13a des Dosierrades 13 gehalten wird. In Fig.7 ist die erste Ausführungsform des Dosierrades 13 in Längs-Schnittansicht zu sehen. Dadurch, dass die Glatträder 15 an den Seitenwänden 10 anliegen und das Federelement 17 sich auf der Seitenfläche 15a der Glatträder 15 abstützt und in dieser Richtung wirkt, wird das Dichtelement 16 in vorstehend beschriebener Weise elastisch federnd in Anlage zur jeweiligen Stirnseite 13a des Dosierrades 13 gehalten. Die Abdichtung des Dosierrades 13 ist damit verbessert und es werden weniger Körner zwischen Dosierrad 13 und Dichtelement 16 eingeklemmt. Ferner werden durch das Federelement 17 die Fertigungstoleranzen der auf der nicht dargestellten Welle angeordneten Bauteile, nämlich Dosierrad 13, Glatträder 15 und Dichtelemente 16, ausgeglichen, indem das Federelement 17 entweder gestaucht wird oder expandiert. Die Montage der Dosiereinrichtung 5 und insbesondere des Dosierrades 13 ist damit besonders erleichtert.

Wie Fig.7 ebenfalls zeigt, sind die Stirnseiten 13a des Dosierrades 13 muldenförmig ausgebildet. Quer zur Dosierrichtung D, also der Drehbewegung des Dosierrades 13 im Betrieb, ergibt sich somit eine besonders kleine Reibfläche zwischen der Stirnseite 13a und den anliegenden Dichtelementen 16. Zum einen reduziert sich dadurch das zum Antrieb des Dosierrades 13 benötigte Drehmoment und zum anderen ergeben sich definierte Kontaktbedingungen zwischen Dosierrad 13 und Dichtelement 16, welche es erlauben, dass das Dichtelement 16 als Opferbauteil für das Dosierrad 13 wirkt. Die Materialkombination von Dosierrad 13 und Dichtelement 16 ist so gewählt, dass das Dichtelement 16 zuerst verschleißt, also als Verschleißpartner dient. Dies hat den Vorteil, dass im Zuge regelmäßiger Wartungsarbeiten das Dosierrad 13 seltener ersetzt werden muss als das Dichtelement 16, wobei das Dichtelement 16 sehr kosteneffizient zu beschaffen ist. Folglich werden so in einfacher Weise Instandhaltungskosten gespart.

In den Fig.8-10 ist eine zweite Ausführungsform des Dosierrades 13 in aus dem Dosiergehäuse 9 ausgebauter Lage zu sehen. Gleichwirkende Teile sind hierbei mit gleichen Bezugsziffern wie in der ersten Ausführungsform gekennzeichnet. Wie Fig.8 zeigt, sind auch diesem Dosierrad 13 beidseitig jeweils ein Glattrad 15 und ein Dichtelement 16 zugeordnet. Die Dichtelemente 16 sind formschlüssig an den Glatträdern 15 festgelegt und beide Teile stehen still im über die Nabe 13c rotierend angetriebenen Betrieb des Dosierrades 13.

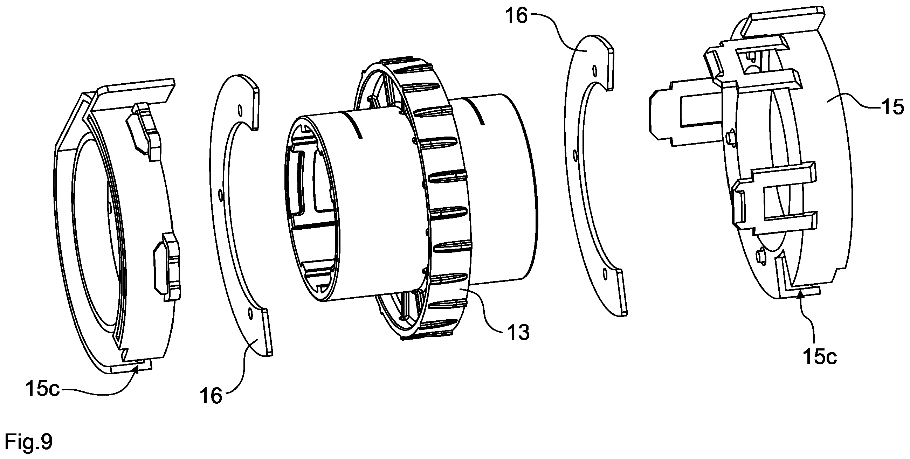

In Fig.9 ist die zweite Ausführungsform des Dosierrades 13 in Explosionsansicht gezeigt. Die Dichtelemente 16 sind in dieser Ausführungsform als zumindest annährend halbkreisförmiges Blechteil ausgeführt und erstrecken sich vom Zulauf 8 in Rotationsrichtung des Dosierrades 13, also Dosierrichtung D, kreisabschnittförmig zum Auslauf 11 zwischen der Seitenfläche 15a des jeweiligen Glattrades 15 und der Stirnseite 13a des Dosierrades 13. Diese Ausführungsform hat zum Vorteil, dass noch weniger Reibung zwischen Dosierrad 13 und den Dichtelementen 16 entsteht, da diese sich im Wesentlichen nur über den Teil des Umfangs des Dosierrades 13 erstrecken in dem körniges Gut transportiert wird.

Um dem Verklemmen von Körnern zwischen Dosierrad 13 und Glattrad 15 vorzubeugen, sind die Glatträder 15 im Bereich des Auslaufs 11 aus dem Dosiergehäuse 9 jeweils mit einer Ausnehmung 15c verssehen. Die Ausnehmungen 15c schaffen einen vergrößerten Abstand zwischen Dosierrad 13 und dem jeweiligen Glattrad 15, so dass die Dosiereinrichtung 5 mittels der Ausnehmungen 15c dazu eingerichtet ist, zwischen dem jeweiligen Glattrad 15 und der Stirnseite 13a des Dosierrades 13 eingeklemmtes körniges Gut auszuwerfen.

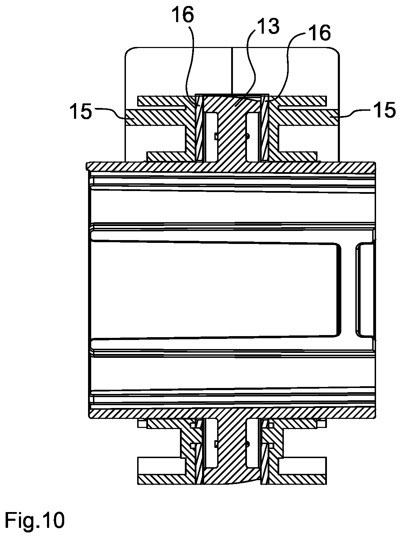

Wie Fig.10, wie auch Fig.7 ferner zeigen, ist das Dosierrad 13 zumindest annährend so breit wie eines der Glatträder 15. Des Weiteren weisen das Dosierrad 13 und die Dichtelemente 16, sowie die Glatträder 15 einen nahezu gleichen Außendurchmesser auf. Auch die Federelemente 17 der ersten Ausführungsform haben einen zumindest annährend identischen Außendurchmesser, wie die Glatträder 15, die Dichtelemente 16 und das Dosierrad 13, wie Fig.7 zeigt.

### Bezugszeichenliste

- 1: Ackerschlepper
- 2: Einzelkornsämaschine
- F: Fahrtrichtung
- 3: Vorratsbehälter
- 4: Säaggregat
- 5: Dosiereinrichtung
- 6: Absperrschieber
- 7a,b: Materialtank
- 8: Zulauf
- 9: Dosiergehäuse
- 10: Seitenwände
- 11: Auslauf
- 12: Gehäuseklappe
- 13: Dosierrad
- 13a: Stirnseite
- 13b: Nabe
- 13c: Förderelement
- D: Dosierrichtung
- 14: Sperrmittel
- 14a: Dichtlippe
- 14b: Schraube
- 15: Glattrad
- 15a: Seitenfläche
- 15b: Verdrehsicherung
- 15c: Ausnehmung
- 16: Dichtelement
- 16a: Ausnehmung
- 16b: Befestigungsnut
- 17: Federelement

## Patentansprüche

1. Dosiereinrichtung (5) für körniges Gut, insbesondere Saatgut und/oder Dünger, wobei die Dosiereinrichtung (5) ein Dosiergehäuse (9) mit zumindest einem Zulauf (8) und zumindest einem Auslauf (11) für das körnige Gut und zwei beabstandet zueinander angeordneten Seitenwänden (10) umfasst, wobei ein Dosierrad (13) mit jeweils zu den Seitenwänden (10) weisenden Stirnseiten (13a) zwischen dem Zulauf (8) einerseits und dem Auslauf (11) andererseits und zwischen den beabstandet zueinander angeordneten Seitenwänden (10) auf einer Welle mit dieser kraftschlüssig verbindbar und von dieser in einer Dosierrichtung (D) drehend antreibbar angeordnet ist, wobei die Dosiereinrichtung (5) ein Füllteil, das zumindest zwei unbefestigt auf der Welle angeordnete Glatträder (15) aufweist, umfasst, wobei an jeder Stirnseite (13a) des Dosierrades (13) ein sich zwischen der Stirnseite (13a) und der Seitenwand (10) erstreckendes Glattrad (15) angeordnet ist, wobei beidseitig zwischen der jeweiligen Stirnseite (13a) des Dosierrades (13) und einer zu dieser Stirnseite (13a) weisenden Seitenfläche (15a) des jeweiligen Glattrades (15) ein Dichtelement (16) angeordnet ist,
**dadurch gekennzeichnet, dass**
dem Dosierrad (13) Sperrmittel (14), welche dazu eingerichtet sind, das Dosierrad (13) entgegen der Dosierrichtung (D) vom Zulauf (8) zum Auslauf (11) und/oder in Dosierrichtung (D) vom Auslauf (11) zum Zulauf (8) gegen den Transport von körnigem Gut zu sperren, zugeordnet sind und
das Dosierrad (13), die Dichtelemente (16) und die Glatträder (15) einen nahezu identischen Außendurchmesser aufweisen.

2. Dosiereinrichtung (5) nach Anspruch 1, **dadurch gekennzeichnet, dass** das Dichtelement (16) als zumindest annährend halbkreisförmiges Blechteil (16) ausgeführt ist, dass sich das Blechteil (16) vom Zulauf (8) in Rotationsrichtung (D) des Dosierrades (13) kreisabschnittförmig zum Auslauf (11) zwischen der Seitenfläche (15a) des jeweiligen Glattrades (15) und der Stirnseite (13a) des Dosierrades (13) erstreckt.

3. Dosiereinrichtung (5) nach Anspruch 1, **dadurch gekennzeichnet, dass** das Dichtelement (16) als ringförmiges Blechteil (16) ausgeführt ist, dass sich das Blechteil (16) kreisartig die Welle umgreifend zwischen der Seitenfläche (15a) des jeweiligen Glattrades (15) und der Stirnseite (13a) des Dosierrades (13) erstreckt.

4. Dosiereinrichtung (5) nach Anspruch 3, **dadurch gekennzeichnet, dass** das ringförmige Blechteil (16) im Bereich des Auslaufs (11) aus dem Dosiergehäuse (9) eine Ausnehmung (16a) aufweist, dass die Dosiereinrichtung (5) mittels der Ausnehmung (16a) dazu eingerichtet ist, zwischen dem Blechteil (16) und der Stirnseite (13a) des Dosierrades (13) eingeklemmtes körniges Gut auszuwerfen.

5. Dosiereinrichtung (5) nach Anspruch 2 oder 4, **dadurch gekennzeichnet, dass** die Glatträder (15) im Bereich des Auslaufs (11) aus dem Dosiergehäuse (9) jeweils eine Ausnehmung (15c) aufweisen, dass die Dosiereinrichtung (5) mittels zumindest einer Ausnehmung (15c) dazu eingerichtet ist, zwischen dem Glattrad (15) und der Stirnseite (13a) des Dosierrades (13) eingeklemmtes körniges Gut auszuwerfen.

6. Dosiereinrichtung (5) nach zumindest einem der vorstehenden Ansprüche, **dadurch gekennzeichnet, dass** zumindest ein Glattrad (15) zwischen dem Dichtelement (16) und der zum Dichtelement (16) weisenden Seitenfläche (15a) ein, vorzugsweise elastisches, in Richtung der Seitenwände (10) wirkendes Federelement (17) aufweist.

7. Dosiereinrichtung (5) nach Anspruch 6, **dadurch gekennzeichnet, dass** das Federelement (17) als ringförmiges Schaumstoffteil (17) ausgeführt ist, dass sich das Schaumstoffteil (17) kreisartig die Welle umgreifend zwischen der Seitenfläche (15a) des Glattrades (15) und dem Dichtelement (16) erstreckt.

8. Dosiereinrichtung (5) nach zumindest einem der vorstehenden Ansprüche, **dadurch gekennzeichnet, dass** das Dosierrad (13) zumindest annährend in der Mitte zwischen den beabstandet zueinander angeordneten Seitenwänden (10) angeordnet ist.

9. Dosiereinrichtung (5) nach zumindest einem der vorstehenden Ansprüche, **dadurch gekennzeichnet, dass** die Dichtelemente (16) und/oder die Glatträder (15) Mittel (15b, 16b) aufweisen mittels derer die Dichtelemente (16) formschlüssig an dem jeweiligen Glattrad (15) befestigt sind.

10. Dosiereinrichtung (5) nach zumindest einem der vorstehenden Ansprüche, **dadurch gekennzeichnet, dass** die Stirnseiten (13a) des Dosierrades (13) muldenförmig ausgebildet sind.

11. Dosiereinrichtung (5) nach zumindest einem der vorstehenden Ansprüche, **dadurch gekennzeichnet, dass** das die zumindest zwei Glatträder (15) aufweisende Füllteil einstückig ausgebildet ist.

12. Dosiereinrichtung (5) nach Anspruch 6, **dadurch gekennzeichnet, dass** das Dosierrad (13), die Dichtelemente (16) und das zumindest eine Federelement (17) einen nahezu identischen Außendurchmesser aufweisen.

13. Dosiereinrichtung (5) nach zumindest einem der vorstehenden Ansprüche, **dadurch gekennzeichnet, dass** die Sperrmittel (14) zumindest eine elastische Dichtlippe (14a) umfassen.

14. Dosiereinrichtung (5) nach zumindest einem der vorstehenden Ansprüche, **dadurch gekennzeichnet, dass** die Sperrmittel (14) zumindest ein Bürstenelement umfassen.

15. Verteilmaschine (2) zum Ausbringen von Saatgut und/oder Dünger umfassend einen Vorratsbehälter (3) für Saatgut und/oder Dünger und zumindest eine einer Auslassöffnung des Vorratsbehälters (3) zugeordnete Dosiereinrichtung (5), **dadurch gekennzeichnet, dass** die Dosiereinrichtung (5) nach zumindest einem der Ansprüche 1 bis 14 ausgebildet ist.

## Claims

1. Metering device (5) for granular material, in particular seed and/or fertilizer, the metering device (5) comprising a metering housing (9) having at least one inlet (8) and at least one outlet (11) for the granular material and two side walls (10) arranged at a distance from one another, a metering wheel (13) with end faces (13a) that face the side walls (10) being arranged on a shaft, between the inlet (8) on one side and the outlet (11) on the other side and between the side walls (10) arranged at a distance from one another, so as to be form-fittingly connectable to the shaft and drivable by the shaft such that it is rotatable in a metering direction (D),
the metering device (5) comprising a
filling part, which has at least two smooth wheels (15) arranged on the shaft in an unattached manner, a smooth wheel (15) that extends between the relevant end face (13a) and the side wall (10) being arranged on each end face (13a) of the metering wheel (13), a sealing element (16) being arranged on both sides between the particular end face (13a) of the metering wheel (13) and a side surface (15a) of the particular smooth wheel (15) that faces this end face (13a), **characterized in that**
the metering wheel (13) is assigned blocking means (14) which are designed to block the metering wheel (13), counter to the metering direction (D) from the inlet (8) to the outlet (11) and/or in the metering direction (D) from the outlet (11) to the inlet (8), against the transportation of granular material, and
the metering wheel (13), the sealing elements (16) and the smooth wheels (15) have an almost identical outer diameter.

2. Metering device (5) according to claim 1, **characterized in that** the sealing element (16) is designed as an at least approximately semicircular sheet metal part (16), **in that** the sheet metal part (16) extends from the inlet (8) in the direction of rotation (D) of the metering wheel (13) in the shape of a segment of a circle to the outlet (11) between the side surface (15a) of the particular smooth wheel (15) and the end face (13a) of the metering wheel (13).

3. Metering device (5) according to claim 1, **characterized in that** the sealing element (16) is designed as an annular sheet metal part (16), **in that** the sheet metal part (16) extends in a circle around the shaft between the side surface (15a) of the particular smooth wheel (15) and the end face (13a) of the metering wheel (13).

4. Metering device (5) according to claim 3, **characterized in that** the annular sheet metal part (16) has a recess (16a) in the region of the outlet (11) from the metering housing (9), **in that** the metering device (5) is designed by means of the recess (16a) to eject granular material jammed between the sheet metal part (16) and the end face (13a) of the metering wheel (13).

5. Metering device (5) according to claim 2 or 4, **characterized in that** the smooth wheels (15) each have a recess (15c) in the region of the outlet (11) from the metering housing (9), **in that** the metering device (5) is designed by means of at least one recess (15c) to eject granular material jammed between the smooth wheel (15) and the end face (13a) of the metering wheel (13).

6. Metering device (5) according to at least one of the preceding claims, **characterized in that** at least one smooth wheel (15) has a preferably resilient spring element (17) acting in the direction of the side walls (10) between the sealing element (16) and the side surface (15a) that faces the sealing element (16).

7. Metering device (5) according to claim 6, **characterized in that** the spring element (17) is designed as an annular foam part (17), **in that** the foam part (17) extends in a circle around the shaft between the side surface (15a) of the smooth wheel (15) and the sealing element (16).

8. Metering device (5) according to at least one of the preceding claims, **characterized in that** the metering wheel (13) is arranged at least approximately in the middle between the side walls (10) arranged at a distance from one another.

9. Metering device (5) according to at least one of the preceding claims, **characterized in that** the sealing elements (16) and/or the smooth wheels (15) have means (15b, 16b) by means of which the sealing elements (16) are form-fittingly attached to the particular smooth wheel (15).

10. Metering device (5) according to at least one of the preceding claims, **characterized in that** the end faces (13a) of the metering wheel (13) are trough-shaped.

11. Metering device (5) according to at least one of the preceding claims, **characterized in that** the filling part having the at least two smooth wheels (15) is formed in one piece.

12. Metering device (5) according to claim 6, **characterized in that** the metering wheel (13), the sealing elements (16) and the at least one spring element (17) have an almost identical outer diameter.

13. Metering device (5) according to at least one of the preceding claims, **characterized in that** the blocking means (14) comprise at least one resilient sealing lip (14a).

14. Metering device (5) according to at least one of the preceding claims, **characterized in that** the blocking means (14) comprise at least one brush element.

15. Distribution machine (2) for spreading seed and/or fertilizer comprising a storage container (3) for seed and/or fertilizer and at least one metering device (5) assigned to an outlet opening of the storage container (3), **characterized in that** the metering device (5) is designed according to at least one of claims 1 to 14.

## Revendications

1. Dispositif de dosage (5) pour un produit granuleux, en particulier des semences et/ou un engrais, le dispositif de dosage (5) comprenant un boîtier de dosage (9) comportant au moins une arrivée (8) et au moins une sortie (11) pour le produit granuleux et deux parois latérales (10) disposées à distance l'une de l'autre, une roue de dosage (13) avec des faces frontales (13a) orientées respectivement vers les parois latérales (10) entre l'arrivée (8) d'une part et la sortie (11) d'autre part et, entre les parois latérales (10) disposées à distance l'une de l'autre, étant disposée sur un arbre de manière à pouvoir être reliée par complémentarité de forme à celui-ci et pouvant être entraînée en rotation par celui-ci dans un sens de dosage (D), dans lequel
le dispositif de dosage (5) comprend une partie de remplissage, qui présente au moins deux roues lisses (15) disposées sans fixation sur l'arbre, une roue lisse (15) s'étendant entre la face frontale (13a) et la paroi latérale (10) étant disposée sur chaque face frontale (13a) de la roue de dosage (13), un élément d'étanchéité (16) étant disposé des deux côtés entre la face frontale (13a) respective de la roue de dosage (13) et une surface latérale (15a), orientée vers cette face frontale (13a), de la roue lisse (15) respective, **caractérisé en ce que**
des moyens de blocage (14) sont associés à la roue de dosage (13), lesquels sont conçus pour bloquer la roue de dosage (13) dans le sens opposé au sens de dosage (D) depuis l'arrivée (8) vers la sortie (11) et/ou dans le sens de dosage (D) depuis la sortie (11) vers l'arrivée (8) contre le transport de produit granuleux et
la roue de dosage (13), les éléments d'étanchéité (16) et les roues lisses (15) présentent un diamètre extérieur pratiquement identique.

2. Dispositif de dosage (5) selon la revendication 1, **caractérisé en ce que** l'élément d'étanchéité (16) est exécuté sous la forme d'une pièce de tôle (16) au moins approximativement semi-circulaire, **en ce que** la pièce de tôle (16) s'étend depuis l'arrivée (8) dans le sens de rotation (D) de la roue de dosage (13) en forme de segment de cercle vers la sortie (11) entre la surface latérale (15a) de la roue lisse (15) respective et la face frontale (13a) de la roue de dosage (13).

3. Dispositif de dosage (5) selon la revendication 1, **caractérisé en ce que** l'élément d'étanchéité (16) est exécuté sous la forme d'une pièce de tôle (16) annulaire, **en ce que** la pièce de tôle (16) s'étend en entourant l'arbre de manière circulaire entre la surface latérale (15a) de la roue lisse (15) respective et la face frontale (13a) de la roue de dosage (13).

4. Dispositif de dosage (5) selon la revendication 3, **caractérisé en ce que** la pièce de tôle (16) annulaire présente un évidement (16a) dans la zone de la sortie (11) du boîtier de dosage (9), **en ce que** le dispositif de dosage (5) est conçu, au moyen de l'évidement (16a), pour éjecter un produit granuleux coincé entre la pièce de tôle (16) et la face frontale (13a) de la roue de dosage (13).

5. Dispositif de dosage (5) selon la revendication 2 ou 4,
**caractérisé en ce que** les roues lisses (15) présentent respectivement un évidement (15c) dans la zone de la sortie (11) du boîtier de dosage (9), **en ce que** le dispositif de dosage (5) est conçu, au moyen d'au moins un évidement (15c), pour éjecter un produit granuleux coincé entre la roue lisse (15) et la face frontale (13a) de la roue de dosage (13).

6. Dispositif de dosage (5) selon au moins l'une des revendications précédentes, **caractérisé en ce qu'**au moins une roue lisse (15) présente, entre l'élément d'étanchéité (16) et la surface latérale (15a) orientée vers l'élément d'étanchéité (16), un élément de ressort (17), de préférence élastique, agissant en direction des parois latérales (10).

7. Dispositif de dosage (5) selon la revendication 6, **caractérisé en ce que** l'élément de ressort (17) est exécuté sous la forme d'une pièce en mousse (17) annulaire, **en ce que** la pièce en mousse (17) s'étend en entourant l'arbre de manière circulaire entre la surface latérale (15a) de la roue lisse (15) et l'élément d'étanchéité (16).

8. Dispositif de dosage (5) selon au moins l'une des revendications précédentes, **caractérisé en ce que** la roue de dosage (13) est disposée au moins approximativement à mi-chemin entre les parois latérales (10) disposées à distance l'une de l'autre.

9. Dispositif de dosage (5) selon au moins l'une des revendications précédentes, **caractérisé en ce que** les éléments d'étanchéité (16) et/ou les roues lisses (15) présentent des moyens (15b, 16b) au moyen desquels les éléments d'étanchéité (16) sont fixés par complémentarité de forme à la roue lisse (15) respective.

10. Dispositif de dosage (5) selon au moins l'une des revendications précédentes, **caractérisé en ce que** les faces frontales (13a) de la roue de dosage (13) sont réalisées en forme d'auge.

11. Dispositif de dosage (5) selon au moins l'une des revendications précédentes, **caractérisé en ce que** la partie de remplissage présentant les au moins deux roues lisses (15) est réalisée d'une seule pièce.

12. Dispositif de dosage (5) selon la revendication 6, **caractérisé en ce que** la roue de dosage (13), les éléments d'étanchéité (16) et l'au moins un élément de ressort (17) présentent un diamètre extérieur pratiquement identique.

13. Dispositif de dosage (5) selon au moins l'une des revendications précédentes, **caractérisé en ce que** les moyens de blocage (14) comprennent au moins une lèvre d'étanchéité élastique (14a).

14. Dispositif de dosage (5) selon au moins l'une des revendications précédentes, **caractérisé en ce que** les moyens de blocage (14) comprennent au moins un élément brosse.

15. Épandeuse (2) destinée à épandre des semences et/ou un engrais, comprenant un réservoir de réserve (3) pour les semences et/ou l'engrais et au moins un dispositif de dosage (5) associé à une ouverture de sortie du réservoir de réserve (3), **caractérisée en ce que** le dispositif de dosage (5) est réalisé selon au moins l'une des revendications 1 à 14.
